# EUROPEAN PATENT APPLICATION

(11) **EP 4 793 248 A1**
(43) Date of publication of application: **19.08.2026**
(21) Application number: 26151491.3
(22) Date of filing: 13.01.2026
(51) Int. Cl.: C03C 3/112

(54) **OPTICAL GLASS AND GLASS ELEMENT**

(30) Priority: 18.02.2025 CN 202510177093
(71) Applicant: CDGM Glass Co., Ltd, Chengdu, Sichuan 610100 (CN)
(72) Inventor: MAO, Lulu, Chengdu (CN); WU, Xuyi, Chengdu (CN); LIU, Zhenyu, Chengdu (CN); KUANG, Bo, Chengdu (CN); MA, Ronghua, Chengdu (CN); WANG, Jian, Chengdu (CN); ZHANG, Zuyi, Chengdu (CN)
(74) Representative: Chung, Hoi Kan

(57) **Abstract**

This disclosure provides optical glass with outstanding ultraviolet radiation resistance and low density. The optical glass contains the following components in units of weight percentage: 50% to 70% of SiO₂; 12.5% to 30% of PbO; 4% to 15% of Na₂O; 2% to 13% of K₂O; and 1% to 14% of BaO, where SiO₂/PbO is 1.8 to 5.5. With proper design of components, the optical glass according to this disclosure shows outstanding ultraviolet radiation resistance and low density, and can be widely used in imaging, photolithography, and other fields.

## Description

### TECHNICAL FIELD

This disclosure relates to optical glass, and in particular, to optical glass with outstanding ultraviolet radiation resistance and low density.

### BACKGROUND

In recent years, devices using optical systems have become increasingly digitalized and refined in precision rapidly. In the field of various optical devices such as image play (projection) devices, for example, projectors or projection TV sets; and photographic devices, for example, digital cameras, demands for overall lightweight design of an optical system by reducing optical elements such as lenses or prisms in the optical system or reducing the density of glass elements have become stronger. Among optical glass for producing glass elements, demands for low-dispersion glass with a medium index of refraction of 1.51 to 1.58 and an Abbe number of 45 to 52 that can achieve overall lightweight design of an optical system or chromatic aberration correction have become particularly high.

As the chipmaking technologies and advanced encapsulation technologies are in a trend toward a lower line width and higher efficiency, photolithography devices working at such a wave band is required for higher resolution, higher luminous flux, and a larger exposure field. In the prior art, optical glass with an index of refraction of 1.51 to 1.58 and an Abbe number of 45 to 52 shows poor ultraviolet radiation resistance, and the transmittance of a glass element made of the glass drops significantly with long time ultraviolet band radiation, causing fatal issues in various photolithography devices working at the ultraviolet band.

### SUMMARY

In view of the foregoing reasons, a technical problem to be solved in this disclosure is to provide optical glass with outstanding ultraviolet radiation resistance and low density.

A technical solution used in this disclosure to resolve the technical problem is as follows:
(1) Optical glass is provided, and contains the following components in units of weight percentage: 50% to 70% of SiO₂; 12.5% to 30% of PbO; 4% to 15% of Na₂O; 2% to 13% of K₂O; and 1% to 14% of BaO, where SiO₂/PbO is 1.8 to 5.5.
(2) The optical glass according to (1) further contains the following components in units of weight percentage: 0% to 5% of Al₂O₃; 0% to 7% of Li₂O; 0% to 5% of ZrO₂; 0% to 8% of SrO; 0% to 8% of CaO; 0% to 8% of MgO; 0% to 8% of B₂O₃; 0% to 5% of Ln₂O₃; 0% to 3% of Nb₂O₅; 0% to 3% of WO₃; 0% to 3% of ZnO; 0% to 3% of TiO₂; 0% to 1% of a clarifying agent; and/or 0% to 5% of F, where Ln₂O₃ is one or more of La₂O₃, Gd₂O₃, Y₂O₃, and Yb₂O₃, and the clarifying agent is one or more of Sb₂O₃, SnO₂, and CeO₂.
(3) Optical glass is provided, and contains components of SiO₂, PbO, Na₂O, K₂O, and BaO in units of weight percentage, where SiO₂/PbO is 1.8 to 5.5, an index of refraction n_{d} of the optical glass is 1.51 to 1.58, an Abbe number v_{q} is 45 to 52, ultraviolet radiation resistance attenuation of transmittance at 365 nm Δτ365 nm is less than 1.5%, and density ρ is less than 3.30 g/cm³.
(4) The optical glass according to (3) contains the following components in units of weight percentage: 50% to 70% of SiO₂; 12.5% to 30% of PbO; 4% to 15% of Na₂O; 2% to 13% of K₂O; 1% to 14% of BaO; 0% to 5% of Al₂O₃; 0% to 7% of Li₂O; 0% to 5% of ZrO2; 0% to 8% of SrO; 0% to 8% of CaO; 0% to 8% of MgO; 0% to 8% of B₂O₃; 0% to 5% of Ln₂O₃; 0% to 3% of Nb₂O₅; 0% to 3% of WO₃; 0% to 3% of ZnO; 0% to 3% of TiO₂; 0% to 1% of a clarifying agent; and/or 0% to 5% of F, where Ln₂O₃ is one or more of La₂O₃, Gd₂O₃, Y₂O₃, and Yb₂O₃, and the clarifying agent is one or more of Sb₂O₃, SnO₂, and CeO₂.
(5) The components of the optical glass according to any of (1) to (4) in units of weight percentage satisfy one or more of the following six conditions:
   1) PbO/BaO is 1.0 to 15.0, PbO/BaO is preferably 1.5 to 10.0, PbO/BaO is more preferably 2.0 to 8.0, PbO/BaO is further preferably 2.5 to 6.0, and PbO/BaO is even further preferably 2.8 to 5.0;
   2) SiO₂/PbO is 2.0 to 5.0, SiO₂/PbO is preferably 2.3 to 4.5, and SiO₂/PbO is more preferably 2.6 to 4.0;
   3) (Al₂O₃+ZrO₂)/BaO is 0.05 to 3.0, (Al₂O₃+ZrO₂)/BaO is preferably 0.1 to 2.0, (Al₂O₃+ZrO₂)/BaO is more preferably 0.1 to 1.5, and (Al₂O₃+ZrO₂)/BaO is further preferably 0.15 to 0.8;
   4) (Na₂O+K₂O)/PbO is 0.3 to 2.0, (Na₂O+K₂O)/PbO is preferably 0.4 to 1.5, (Na₂O+K₂O)/PbO is more preferably 0.5 to 1.2, and (Na₂O+K₂O)/PbO is further preferably 0.6 to 1.0;
   5) Na₂O/K₂O is 0.8 to 5.0, Na₂O/K₂O is preferably 1.0 to 4.0, Na₂O/K₂O is more preferably 1.1 to 3.0, and Na₂O/K₂O is further preferably 1.1 to 2.5; and
   6) Al₂O₃/(ZrO₂+TiO₂+Nb₂O₅) is greater than 0.5, Al₂O₃/(ZrO₂+TiO₂+Nb₂O₅) is preferably greater than 0.8, Al₂O₃/(ZrO₂+TiO₂+Nb₂O₅) is more preferably greater than 1.0, and Al₂O₃/(ZrO₂+TiO₂+Nb₂O₅) is further preferably greater than 1.5 to 5.0.
(6) The components of the optical glass according to any of (1) to (4) in units of weight percentage satisfy one or more of the following three conditions:
   1) F/(Al₂O₃+ZrO₂) is 0.1 to 5.0, F/(Al₂O₃+ZrO₂) is preferably 0.3 to 4.0, F/(Al₂O₃+ZrO₂) is more preferably 0.4 to 3.0, and F/(Al₂O₃+ZrO₂) is further preferably 0.5 to 2.0;
   2) 10×F/PbO is 0.05 to 3.2, 10×F/PbO is preferably 0.1 to 2.0, 10×F/PbO is more preferably 0.2 to 1.0, and 10×F/PbO is further preferably 0.2 to 0.8; and
   3) (MgO+CaO+SrO)/F is less than 2.0, (MgO+CaO+SrO)/F is preferably less than 1.5, (MgO+CaO+SrO)/F is more preferably less than 1.0, and (MgO+CaO+SrO)/F is further preferably less than 0.5.
(7) The optical glass according to any of (1) to (4) contains the following components in units of weight percentage: 55% to 65% of SiO₂; preferably 57% to 63% of SiO₂; 14% to 27% of PbO, preferably 16% to 23% of PbO; 5% to 14% of Na₂O, preferably 6% to 12% of Na₂O; 4% to 12% of K₂O, preferably 5% to 10% of K₂O; 0.1% to 4% of Al₂O₃, preferably 0.1% to 3% of Al₂O₃; 2% to 12% of BaO, preferably 3% to 9% of BaO; 0.1% to 4% of F, preferably 0.2% to 3% of F; 0% to 3% of Li₂O, preferably 0% to 2% of Li₂O, and more preferably no Li₂O; 0.1% to 4% of ZrO₂, preferably 0.1% to 2% of ZrO₂; 0% to 5% of SrO, preferably0% to 2% of SrO, and more preferably no SrO; 0% to 5% of CaO, preferably 0% to 2% of CaO, and more preferably no CaO; 0% to 5% of MgO, preferably0% to 2% of MgO, and more preferably no MgO; 0% to 5% of B₂O₃, preferably 0% to 2% of B₂O₃, and more preferably no B₂O₃; 0% to 3% of Ln₂O₃, preferably0% to 1% of Ln₂O₃; 0% to 2% of Nb₂O₅, preferably 0% to 1% of Nb₂O₅, and more preferably no Nb₂O₅; 0% to 2% of WO₃, preferably 0% to 1% of WO₃, and more preferably no WO₃; 0% to 2% of ZnO, preferably 0% to 1% of ZnO, and more preferably no ZnO; 0% to 2% of TiO₂, preferably 0% to 1% of TiO₂, and more preferably no TiO₂; and/ or 0% to 0.8% of a clarifying agent, preferably 0% to 0.5% of the clarifying agent, where Ln₂O₃ is one or more of La₂O₃, Gd₂O₃, Y₂O₃, and Yb₂O₃, and the clarifying agent is one or more of Sb₂O₃, SnO₂, and CeO₂.
(8) The components of the optical glass according to any of (1) to (4) do not include a V oxide; a Cr oxide; an Mn oxide; a Fe oxide; a Co oxide; a Ni oxide; a Cu oxide; an Ag oxide; and/or a Mo oxide.
(9) The index of refraction n_{d} of the optical glass according to any of (1) to (4) is 1.51 to 1.58, preferably 1.52 to 1.57, and more preferably 1.53 to 1.56; and the Abbe number v_{d} is 45 to 52, preferably 46 to 50, and more preferably 47 to 49.
(10) For the optical glass according to any of (1) to (4), the transmittance at 365 nm τ₃₆₅ₙₘ is greater than 98.5%, preferably greater than 99.0%, and more preferably greater than 99.5%; the ultraviolet radiation resistance attenuation of the transmittance at 365 nm Δτ₃₆₅ₙₘ is less than 1.5%, preferably less than 1.0%, more preferably less than 0.8%, and further preferably less than 0.6%; acid durability D_{A} is higher than Class 2, preferably Class 1; water durability D_{W} is higher than Class 2, preferably Class 1; the density ρ is less than 3.30 g/cm³, preferably less than 3.20 g/cm³, and more preferably less than 3.10 g/cm³; a coefficient of thermal expansion α_{-30/70°C} is less than 100×10⁻⁷/K, preferably less than 95×10⁻⁷/K, and more preferably less than 90×10⁻⁷/K; an extent of bubble is higher than Grade A, preferably higher than Grade A₀, and more preferably Grade A₀₀; an extent of striae is higher than Grade C, preferably higher than Grade B; an abrasion factor F_{A} is 60 to 110, preferably 70 to 100, and more preferably 80 to 95; a high-temperature viscosity at 1200°C is less than 800 dPaS, preferably less than 600 dPaS, more preferably less than 500 dPaS, and further preferably less than 450 dPaS; and/or a transition temperature T_{g} is lower than 480°C, preferably lower than 465°C, and more preferably lower than 455°C.
(11) A glass preform is provided, and made of the optical glass according to any of (1) to (10).
(12) A glass element is provided, and made of the optical glass according to any of (1) to (10), or made of the glass preform according to (11).
(13) A device is provided, and contains the optical glass according to any of (1) to (10), and/or contains the glass element according to (12).

This disclosure offers the following benefits: With proper design of components, the optical glass according to this disclosure shows outstanding ultraviolet radiation resistance and low density, and can be widely used in imaging, photolithography, and other fields.

### DETAILED DESCRIPTION OF THE EMBODIMENTS

The following describes embodiments of optical glass according to this disclosure in detail, but this disclosure is not limited to the following embodiments, which can be implemented with appropriate changes within the scope of the objective of this disclosure. In addition, although there are appropriate omissions for repeated descriptions, the subject of this disclosure will not be limited by this. In the following content, the optical glass according to this disclosure is sometimes referred to as glass in short.

### [Optical glass]

A range of each component (ingredient) of the optical glass according to this disclosure is described below. In this disclosure, unless otherwise specified, a content of each component, a sum of contents, and a total content are all expressed in weight percentage (wt%). In this disclosure, each component is expressed as an oxide, except the component F (fluorine), and a sum of a weight percentage of all oxide components in the glass and a weight percentage of the component F in the glass is 100%.

Unless otherwise specified in specific situations, a numerical range listed in this disclosure include an upper limit and a lower limit, and "above" and "below" include endpoint values, as well as all integers and fractions within the range, and are not limited to specific values listed in a defined range. The term "and/or" as used herein is inclusive, for example, "A and/or B" indicates the following three cases: only A exists, only B exists, or both A and B exist.

### <Necessary components and optional components>

SiO₂ is a main network-forming component of the glass according to this disclosure. When a content of SiO₂ is lower than 50%, ultraviolet transmittance of the glass is low, which is unfavorable for ultraviolet optical systems with a long optical path of light passing through and high demands on illuminance. Therefore, the minimal content of SiO₂ is 50%, preferably 55%, and more preferably 57%. When the content of SiO₂ is higher than 70%, it is difficult for an index of refraction of the glass to satisfy the design requirements, and the glass needs to be melted at a higher temperature, while a high melting temperature causes an exponential increase of corrosion of a crucible due to the glass melt, and a content of ions that can greatly absorb ultraviolet wave bands, for example, iron (Fe) ions and platinum (Pt) ions, increases rapidly, instead leading to a quick drop in the ultraviolet transmittance. Therefore, the maximal content of SiO₂ is 70%, preferably 65%, and more preferably 63%.

PbO can improve the index of refraction and ultraviolet transmittance of the glass while lowering a transition temperature. When a content of PbO is too high, the chemical stability of the glass is reduced, and a coefficient of thermal expansion is greater. Therefore, the content of PbO is 12.5% to 30%, preferably 14% to 27%, and more preferably 16% to 23%.

Based on a wealth of experiments and research, it is found that in some embodiments, keeping a ratio of the content of SiO₂ to the content of PbO, that is, SiO₂/PbO, between 1.8 and 5.5 can not only improve ultraviolet radiation resistance and optimize an abrasion factor of the glass, but also prevent higher density. Therefore, SiO₂/PbO is preferably 1.8 to 5.5, SiO₂/PbO is more preferably 2.0 to 5.0, SiO₂/PbO is further preferably 2.3 to 4.5, and SiO₂/PbO is even further preferably 2.6 to 4.0.

Na₂O can improve the meltability, devitrification resistance, and ultraviolet radiation resistance of the glass. However, when a content thereof is too high, the coefficient of thermal expansion of the glass increases, and the index of refraction is lower. Therefore, the content of Na₂O is 4% to 15%, preferably 5% to 14%, and more preferably 6% to 12%.

K₂O can enhance the thermal stability and meltability of glass, lower the transition temperature, reduce high-temperature viscosity of the glass, and improve the ultraviolet transmittance of the glass. However, when a content thereof is too high, the devitrification resistance and chemical stability of the glass is reduced. Therefore, according to this disclosure, the content of K₂O is 2% to 13%, preferably 4% to 12%, and more preferably 5% to 10%.

In some embodiments, when Na₂O/K₂O is less than 0.8, the ultraviolet radiation resistance and chemical stability of the glass is reduced; and when Na₂O/K₂O is greater than 5.0, an extent of bubble of the glass has poorer performance. Therefore, Na₂O/K₂O is preferably 0.8 to 5.0, Na₂O/K₂O is more preferably 1.0 to 4.0, Na₂O/K₂O is further preferably 1.1 to 3.0, and Na₂O/K₂O is even further preferably 1.1 to 2.5.

In some embodiments, keeping a ratio (Na₂O+K₂O)/PbO of a sum of contents of Na₂O and K₂O, that is, Na₂O+K₂O, to PbO between 0.3 and 2.0 can not only improve the ultraviolet transmittance and the extent of bubble of the glass, but also prevent higher density and a higher transition temperature of the glass. Therefore, (Na₂O+K₂O)/PbO is preferably 0.3 to 2.0, (Na₂O+K₂O)/PbO is more preferably 0.4 to 1.5, (Na₂O+K₂O)/PbO is further preferably 0.5 to 1.2, and (Na₂O+K₂O)/PbO is even further preferably 0.6 to 1.0.

Li₂O can effectively lower the transition temperature of the glass. However, optical glass is typically melted in platinum or platinum alloy crucibles. During high-temperature melting, Li in the glass components tends to corrode the platinum or platinum alloy crucibles, resulting in considerable presence of platinum-containing inclusions in the final glass product and a decrease in the ultraviolet transmittance of the glass. Therefore, according to this disclosure, a content of Li₂O is 0% to 7%, preferably 0% to 3%, and more preferably 0% to 2%. In some embodiments, a further preferable option is containing no Li₂O.

According to this disclosure, BaO can adjust the index of refraction, improve the transmittance and the high-temperature viscosity of the glass, and further reduce the coefficient of thermal expansion of the glass. However, when a content thereof is too high, the chemical stability of the glass is reduced. Therefore, the content of BaO is 1% to 14%, preferably 2% to 12%, and more preferably 3% to 9%.

Based on a wealth of experiments and research, it is found that in some embodiments, keeping a ratio of the content of PbO to the content of BaO, that is, PbO/BaO, between 1.0 and 15.0 can improve the ultraviolet transmittance and chemical stability of the glass, and enhance the high-temperature viscosity of the glass. Therefore, PbO/BaO is preferably 1.0 to 15.0, PbO/BaO is more preferably 1.5 to 10.0, PbO/BaO is even more preferably 2.0 to 8.0, PbO/BaO is further preferably 2.5 to 6.0, and PbO/BaO is even further preferably 2.8 to 5.0.

SrO can enhance the devitrification resistance of glass, and improve the melting performance of the glass. However, when a content thereof is too high, the ultraviolet transmittance of the glass is reduced, and the cost of the glass increases significantly. Therefore, the content of SrO is 0% to 8%, preferably 0% to 5%, and more preferably 0% to 2%. In some embodiments, a further preferable option is containing no SrO.

CaO can improve the density and processing performance of the glass. However, when a content of CaO is too high, the anti-devitrification performance of the glass becomes poorer, and the ultraviolet radiation resistance becomes poorer. Therefore, the content of CaO is 0% to 8%, preferably 0% to 5%, and more preferably 0% to 2%. In some embodiments, a further preferable option is containing no CaO.

MgO can improve the meltability of the glass. However, when a content thereof is too high, the devitrification resistance and stability of the glass is reduced. Therefore, the content of MgO is 0% to 8%, preferably 0% to 5%, and more preferably 0% to 2%. In some embodiments, a further preferable option is containing no MgO.

Al₂O₃ can enhance the compactness of an internal structure of the glass, improve the ultraviolet transmittance and chemical stability of the glass, and enhance the high-temperature viscosity of the glass. When a content thereof is higher than 5%, stones are prone to appear inside the glass, causing poorer internal quality of the glass. Therefore, the content of Al₂O₃ is 0% to 5%, preferably 0.1% to 4%, and more preferably 0.1% to 3%.

ZrO₂ can enhance the devitrification resistance of the glass, improve the chemical stability and mechanical properties, reduce the corrosion of a crucible material during the melting caused by a raw material of the glass, and improve the ultraviolet transmittance of the glass. However, when a content thereof is too high, the difficulty of melting down the glass is higher, requiring a higher melting temperature, and leads to inclusions within the glass and a decrease in light transmittance. Therefore, according to this disclosure, a content of ZrO₂ is 0% to 5%, preferably 0.1% to 4%, and more preferably 0.1% to 2%.

In some embodiments, keeping a ratio (Al₂O₃+ZrO₂)/BaO of a sum of contents of Al₂O₃ and ZrO₂, that is, Al₂O₃+ZrO₂, to BaO between 0.05 and 3.0 can not only improve the ultraviolet transmittance and ultraviolet radiation resistance of the glass, but also prevent a poorer extent of striae and a poorer coefficient of thermal expansion of the glass. Therefore, (Al₂O₃+ZrO₂)/BaO is preferably 0.05 to 3.0, (Al₂O₃+ZrO₂)/BaO is more preferably 0.1 to 2.0, (Al₂O₃+ZrO₂)/BaO is further preferably 0.1 to 1.5, and (Al₂O₃+ZrO₂)/BaO is even further preferably 0.15 to 0.8.

B₂O₃ can improve the meltability of the glass. However, when a content thereof is too high, the corrosion of a crucible caused by the glass melt is accelerated, leading to a decrease in the ultraviolet transmittance of the glass. Therefore, the content of B₂O₃ is 0% to 8%, preferably 0% to 5%, and more preferably 0% to 2%. In some embodiments, a further preferable option is containing no B₂O₃.

Ln₂O₃ (Ln₂O₃ is one or more of La₂O₃, Gd₂O₃, Y₂O₃, and Yb₂O₃) is a component that can enhance the index of refraction and chemical stability of the glass. Keeping a content of Ln₂O₃ lower than 5% can prevent poorer devitrification resistance of the glass, and prevent that the index of refraction and Abbe number of the glass exceed the design requirements. Therefore, the content of Ln₂O₃ is 0% to 5%, preferably 0% to 3%, and more preferably 0% to 1%.

Nb₂O₅, TiO₂, and WO₃ are all oxides with a high index of refraction and high dispersion that can enhance the ultraviolet radiation resistance of the glass while increasing the index of refraction and dispersion of the glass. However, a high extent of each of these oxides reduces the ultraviolet transmittance of the glass. Therefore, according to this disclosure, the content of Nb₂O₅ is 0% to 3%, preferably 0% to 2%, and more preferably 0% to 1%; the content of TiO₂ is 0% to 3%, preferably 0% to 2%, and more preferably 0% to 1%; and the content of WO₃ is 0% to 3%, preferably 0% to 2%, and more preferably 0% to 1%. In some embodiments, a further preferable option is containing no TiO₂; no Nb₂O₅; and/or no WO₃.

In some embodiments, keeping a ratio Al₂O₃/(ZrO₂+TiO₂+Nb₂O₅) of the content of Al₂O₃ to a sum of contents of ZrO₂, TiO₂, and Nb₂O₅, that is, ZrO₂+TiO₂+Nb₂O₅ greater than 0.5 can improve the ultraviolet radiation resistance and an extent of striae of the glass, and prevent a larger coefficient of thermal expansion of the glass. Therefore, Al₂O₃/(ZrO₂+TiO₂+Nb₂O₅) is preferably greater than 0.5, Al₂O₃/(ZrO₂+TiO₂+Nb₂O₅) is more preferably greater than 0.8, Al₂O₃/(ZrO₂+TiO₂+Nb₂O₅) is further preferably greater than 1.0, and Al₂O₃/(ZrO₂+TiO₂+Nb₂O₅) is even further preferably 1.5 to 5.0.

ZnO can reinforce a network structure of the glass, and improve the index of refraction and ultraviolet transmittance of the glass. However, when a content of ZnO is too high, the tendency of phase separation in the glass is more obvious, the ultraviolet transmittance, instead, is reduced, and the extent of striae of the glass becomes poorer. Therefore, the content of ZnO is 0% to 3%, preferably 0% to 2%, and more preferably 0% to 1%. In some embodiments, a further preferable option is containing no ZnO.

According to this disclosure, one or more components of 0% to 1% of Sb₂O₃, SnO₂, and CeO₂ is contained as a clarifying agent, such that a clarification effect of the glass can be improved, enhancing the extent of bubble of the glass. A content of the clarifying agent is preferably 0% to 0.8%, and the content of the clarifying agent is more preferably 0% to 0.5%.

F (fluorine) can enhance the ultraviolet transmittance and ultraviolet radiation resistance of the glass. However, when a content thereof is too high, significant volatilization occurs during glass melting, causing fluctuations in the index of refraction and internal quality (extent of striae and extent of bubble) of the glass; and a challenging case for achieving the optical homogeneity of the glass required in design, as well as health risks to a production environment and personnel. Therefore, the content of F is 0% to 5%, preferably 0.1% to 4%, and more preferably 0.2% to 3%.

In some embodiments, keeping a ratio F/(Al₂O₃+ZrO₂) of F to a sum of contents of Al₂O₃ and ZrO₂, that is, Al₂O₃+ZrO₂, between 0.1 and 5.0 can improve the ultraviolet transmittance and extent of bubble of the glass, and optimize the abrasion factor and high-temperature viscosity of the glass. Therefore, F/(Al₂O₃+ZrO₂) is preferably 0.1 to 5.0, F/(Al₂O₃+ZrO₂) is more preferably 0.3 to 4.0, F/(Al₂O₃+ZrO₂) is further preferably 0.4 to 3.0, and F/(Al₂O₃+ZrO₂) is even further preferably 0.5 to 2.0.

In some embodiments, keeping 10×F/PbO between 0.05 and 3.2 can improve the extent of striae and chemical stability of the glass, and reduce the transition temperature of the glass. Therefore, 10×F/PbO is preferably 0.05 to 3.2, 10×F/PbO is more preferably 0.1 to 2.0, 10×F/PbO is further preferably 0.2 to 1.0, and 10×F/PbO is even further preferably 0.2 to 0.8.

In some embodiments, keeping (MgO+CaO+SrO)/F less than 2.0 can improve the extent of bubble of the glass, and prevent a larger coefficient of thermal expansion of the glass. Therefore, (MgO+CaO+SrO)/F is preferably less than 2.0, (MgO+CaO+SrO)/F is more preferably less than 1.5, (MgO+CaO+SrO)/F is further preferably less than 1.0, and (MgO+CaO+SrO)/F is even further preferably less than 0.5.

### <Components to be excluded>

In the glass according to this disclosure, if an oxide of a transition metal, for example, V, Cr, Mn, Fe, Co, Ni, Cu, Ag, and Mo, is contained alone or in combination, even in a small amount, the glass can be stained, and a specific wavelength of visible light is absorbed, reducing the desired effect of improving visible light transmittance according to this disclosure. Therefore, the optical glass according to this disclosure preferably does not contain the components described above.

The "contain no/not contain/not include" and "0%" used herein indicates that the compound, molecule, or element is not intentionally added into the optical glass according to this disclosure as a raw material. However, as a raw material and/or device for producing optical glass, some impurities or components that are not intentionally added may exist, which will be contained in the final optical glass in a small amount or trace amount, and such a case also falls within the protection scope of this disclosure.

Properties of the optical glass according to this disclosure are described below.

### <Index of refraction and Abbe number>

The index of refraction (n_{d}) and the Abbe number (v_{d}) of the optical glass are tested according to methods specified in GB/T 7962.1-2010.

In some embodiments, a lower limit of the index of refraction (n_{d}) of the optical glass according to this disclosure is 1.51, preferably 1.52, and more preferably 1.53.

In some embodiments, an upper limit of the index of refraction (n_{d}) of the optical glass according to this disclosure is 1.58, preferably 1.57, and more preferably 1.56.

In some embodiments, a lower limit of the Abbe number (v_{d}) of the optical glass according to this disclosure is 45, preferably 46, and more preferably 47.

In some embodiments, an upper limit of the Abbe number (v_{d}) of the optical glass according to this disclosure is 52, preferably 50, and more preferably 49.

### <Transmittance at 365 nm>

The ultraviolet transmittance of the optical glass according to this disclosure is represented by the transmittance at 365 nm (τ₃₆₅ₙₘ). The transmittance at 365 nm (τ₃₆₅ₙₘ) is tested according to a method specified in GB/T7962.12-2010, with a glass sample as thick as 10 mm.

In some embodiments, the transmittance at 365 nm (τ₃₆₅ₙₘ) of the optical glass according to this disclosure is greater than 98.5%, preferably greater than 99.0%, and more preferably greater than 99.5%.

### <Ultraviolet radiation resistance>

The ultraviolet radiation resistance of the optical glass is represented by Δτ₃₆₅ₙₘ. Δτ₃₆₅ₙₘ is ultraviolet radiation resistance attenuation of the transmittance at 365 nm, and a lower Δτ₃₆₅ₙₘ indicates more outstanding ultraviolet radiation resistance of the glass.

A method for testing Δτ₃₆₅ₙₘ is as follows: An original transmittance at 365 nm τ₃₆₅ₙₘ₋₁ of a sample is tested according to a method specified in GB/T7962.12-2010, and then a high-pressure mercury lamp is used for irradiation. Power density of a surface of the glass is 1 W/cm². After two hours of the irradiation, the transmittance at 365 nm τ₃₆₅ₙₘ₋₂ is tested again according to the method specified in GB/T7962.12-2010. A difference value τ₃₆₅ₙₘ₋₁₋τ₃₆₅ₙₘ₋₂ between the two tests is attenuation of the glass at such a wavelength. A thickness of the glass sample is 10 mm.

In some embodiments, the ultraviolet radiation resistance attenuation of the transmittance at 365 nm (Δτ₃₆₅ₙₘ) of the optical glass according to this disclosure is less than 1.5%, preferably less than 1.0%, more preferably less than 0.8%, and further preferably less than 0.6%.

### <Acid durability>

The acid durability (D_{A}) (powder method) of the optical glass is tested according to a method specified in GB/T 17129.

In some embodiments, the acid durability (D_{A}) of the optical glass according to this disclosure is higher than Class 2, preferably Class 1.

### <Water durability>

The water durability (D_{W}) (powder method) of the optical glass is tested according to a method specified in GB/T 17129.

In some embodiments, the water durability (D_{W}) of the optical glass according to this disclosure is higher than Class 2, preferably Class 1.

### <Transition temperature>

The transition temperature (T_{g}) of the optical glass is tested according to a method specified in GB/T7962.16-2010.

In some embodiments, the transition temperature (T_{g}) of the optical glass according to this disclosure is lower than 480°C, preferably lower than 465°C, and more preferably lower than 455°C.

### <Density>

The density (ρ) of the optical glass is tested according to a method specified in GB/T7962.20-2010.

In some embodiments, the density (ρ) of the optical glass according to this disclosure is less than 3.30 g/cm³, preferably less than 3.20 g/cm³, and more preferably less than 3.10 g/cm³.

### <Coefficient of thermal expansion>

The coefficient of thermal expansion (α_{-30/70°C}) of the optical glass is tested according to a method specified in GB/T7962.16-2010, to obtain data at -30°C to 70°C.

In some embodiments, the coefficient of thermal expansion (α_{-30/70°C}) of the optical glass according to this disclosure is less than 100×10⁻⁷/K, preferably less than 95× 10⁻⁷/K, and more preferably less than 90×10⁻⁷/K.

### <Extent of bubble>

The extent of bubble of the optical glass is tested and rated according to a method specified in GB/T 7962.8-2010.

In some embodiments, the extent of bubble of the optical glass according to this disclosure is higher than Grade A, preferably higher than Grade A₀, and more preferably Grade A₀₀.

### <Extent of striae>

A method for testing the extent of striae of the optical glass is as follows: A point source of light and a lens are used to compose a striae apparatus, and the glass is observed from a direction in which striae can be identified most easily and compared with a standard sample. The extent of striae is categorized into four grades according to Table 1.

**Table 1 Categorization Standard of Extent of Striae**

| Grade | Extent of striae |
|---|---|
| A | No visible striae in specified testing conditions |
| B | Fine and scattered striae in specified conditions |
| C | Slight parallel striae in specified conditions |
| D | Coarse parallel striae in specified conditions |

In some embodiments, the extent of striae of the optical glass according to this disclosure is higher than Grade C, preferably higher than Grade B.

### <Abrasion factor>

The abrasion factor (F_{A}) of the optical glass refers to a numerical value obtained by multiplying a ratio of an abrasion loss of the tested glass sample to an abrasion loss (volume) of a standard sample (H-K9 glass) by 100, which is expressed in the following formula:
${F}_{A} = V / {V}_{0} \times 100 = \left(W/ρ\right) / \left({W}_{0}/{ρ}_{0}\right) \times 100$

In this formula: V is the abrasion volume loss of the tested sample;
V₀ is the abrasion volume loss of the standard sample;
W is the abrasion weight loss of the tested sample;
W₀ is the abrasion volume loss of the standard sample;
ρ is density of the tested sample; and
ρ₀ is density of the standard sample.

In some embodiments, a lower limit of the abrasion factor (F_{A}) of the optical glass according to this disclosure is 60, preferably 70, and more preferably 80.

In some embodiments, an upper limit of the abrasion factor (F_{A}) of the optical glass according to this disclosure is 110, preferably 100, and more preferably 95.

### <High-temperature viscosity>

The high-temperature viscosity of the optical glass is tested according to the following method: The THETA Rheotronic II high-temperature viscometer is used for rotating-method tests, and a numerical value is expressed in dPaS (Pascal). A smaller numerical value indicates lower viscosity.

In some embodiments, the high-temperature viscosity at 1200°C of the optical glass according to this disclosure is less than 800 dPaS, preferably less than 600 dPaS, more preferably less than 500 dPaS, and further preferably less than 450 dPaS.

### [Method for manufacturing optical glass]

A method for manufacturing the optical glass according to this disclosure is as follows: The glass according to this disclosure is produced using conventional raw materials and conventional processes. A carbonate, a nitrate, a sulfate, a hydroxide, an oxide, a fluoride, and others are used as raw materials and batched according to a conventional method. The prepared batch is charged into a melting furnace (for example, a platinum crucible or quartz crucible) at a temperature between 1200°C and 1500°C for melting. After clarification, stirring, and homogenization, homogeneous molten glass free from bubbles and undissolved substances is obtained. The molten glass is cast into a mold and annealed to form the optical glass. Those skilled in the art can select the raw materials, processes and methods, and process parameters properly based on actual needs.

### [Glass preform and glass element]

The glass preform can be fabricated from the produced optical glass by means of, for example, direct drop forming, grinding and polishing, or a press forming technique including hot press forming. To be specific, the molten optical glass may undergo direct precision drop forming to produce a precision glass preform; the glass preform can be fabricated through mechanical processing, for example, grinding and polishing; or a preform for press forming purposes is fabricated from the optical glass, and the preform then undergoes hot press forming and subsequently grinding and polishing to produce the glass preform. It should be noted that a means for preparing the glass preform is not limited to those described above.

As described above, the optical glass according to this disclosure is useful for various glass elements and optical designs. Preferably, the optical glass according to this disclosure is used to form a preform, and then the preform is used to fabricate glass elements, for example, lenses and prisms, through hot press forming, precision impact molding, or another process.

Both the glass preform and the glass element according to this disclosure are formed from the optical glass according to this disclosure. The glass preform according to this disclosure shows outstanding properties inherent to optical glass; and the glass element according to this disclosure shows outstanding properties inherent to optical glass, and can provide various high-value optical glass elements, for example, lenses and prisms.

Examples of the lenses include concave meniscus lenses, convex meniscus lenses, biconvex lenses, biconcave lenses, plano-convex lenses, plano-concave lenses, bi-planar lenses, and various other lenses, with spherical or aspherical lens faces.

### [Device]

The glass element formed from the optical glass according to this disclosure can be used to manufacture photographic devices, filming devices, projection devices, display devices, photolithography machines, vehicle-mounted devices, monitoring devices, and other devices.

### Examples

### <Optical glass examples>

To further explain and illustrate the technical solutions in this disclosure more clearly, the following non-limiting examples are provided.

In this example, the optical glass with the composition shown in Table 2 to Table 4 is obtained according to the foregoing method for manufacturing the optical glass. In addition, properties of each glass are tested according to the testing methods described in this disclosure, and testing results are shown in Table 2 to Table 4.

**Table 2**

| Example (wt%) | 1# | 2# | 3# | 4# | 5# | 6# | 7# |
|---|---|---|---|---|---|---|---|
| SiO₂ | 53.23 | 58.03 | 65.34 | 52.36 | 54.22 | 67.15 | 52.3 |
| PbO | 26.52 | 13.58 | 17.35 | 15.53 | 14.14 | 15.54 | 25.36 |
| Na₂O | 4.67 | 13.27 | 5.22 | 9.35 | 12.34 | 6.12 | 6.14 |
| K₂O | 3.7 | 5.13 | 2.36 | 4.42 | 11.25 | 3.11 | 5.23 |
| Li₂O | 0 | 0.5 | 0 | 0 | 0 | 0 | 0 |
| Al₂O₃ | 4.55 | 0.56 | 2.14 | 0.9 | 0.75 | 1.2 | 3.42 |
| ZrO₂ | 1.13 | 0.35 | 1.36 | 0 | 0.36 | 1.3 | 3.25 |
| BaO | 2.32 | 1.56 | 2.07 | 12.32 | 4.12 | 4.82 | 2.85 |
| SrO | 0 | 1 | 0 | 0 | 0 | 0 | 0 |
| CaO | 1.2 | 0 | 0 | 0.8 | 0 | 0 | 0 |
| MgO | 0 | 0 | 0.2 | 0.2 | 0 | 0 | 0 |
| B₂O₃ | 0 | 0 | 1 | 0 | 0 | 0 | 0 |
| La₂O₃ | 0 | 1 | 0 | 0 | 0 | 0 | 0 |
| Gd₂O₃ | 0 | 0 | 0 | 0 | 0 | 0 | 0 |
| Y₂O₃ | 0 | 0 | 0 | 0 | 0 | 0 | 0 |
| Yb₂O₃ | 0 | 0 | 0 | 0 | 0 | 0 | 0 |
| Nb₂O₅ | 0 | 0.5 | 0 | 0 | 0 | 0 | 0 |
| WO₃ | 0 | 0 | 1.2 | 0 | 0 | 0 | 0 |
| ZnO | 1.08 | 0 | 0 | 0 | 0 | 0 | 0 |
| TiO₂ | 0.2 | 0 | 0 | 0.8 | 0 | 0 | 0 |
| Sb₂O₃ | 0.1 | 0.2 | 0.5 | 0 | 0.3 | 0.2 | 0 |
| SnO₂ | 0 | 0 | 0 | 0 | 0 | 0.1 | 0.2 |
| CeO₂ | 0 | 0 | 0 | 0 | 0 | 0 | 0 |
| F | 1.3 | 4.32 | 1.26 | 3.32 | 2.52 | 0.46 | 1.25 |
| Total | 100 | 100 | 100 | 100 | 100 | 100 | 100 |
| PbO/BaO | 11.43 | 8.71 | 8.38 | 1.26 | 3.43 | 3.22 | 8.90 |
| SiO₂/PbO | 2.01 | 4.27 | 3.77 | 3.37 | 3.83 | 4.32 | 2.06 |
| (Al₂O₃+ZrO₂)/BaO | 2.45 | 0.58 | 1.69 | 0.07 | 0.27 | 0.52 | 2.34 |
| (Na₂O+K₂O)/PbO | 0.32 | 1.35 | 0.44 | 0.89 | 1.67 | 0.59 | 0.45 |
| Na₂O/K₂O | 1.26 | 2.59 | 2.21 | 2.12 | 1.10 | 1.97 | 1.17 |
| Al₂O₃/(ZrO₂+TiO₂+Nb₂O₅) | 3.42 | 0.66 | 1.57 | 1.13 | 2.08 | 0.92 | 1.05 |
| F/(Al₂O₃+ZrO₂) | 0.23 | 4.75 | 0.36 | 3.69 | 2.27 | 0.18 | 0.19 |
| 10×F/PbO | 0.49 | 3.18 | 0.73 | 2.14 | 1.78 | 0.30 | 0.49 |
| (MgO+CaO+SrO)/F | 0.92 | 0.23 | 0.16 | 3.30 | 0.00 | 0.00 | 0.00 |
| n_{d} | 1.57536 | 1.51863 | 1.56237 | 1.55353 | 1.51356 | 1.52745 | 1.56637 |
| Vd | 46.06 | 51.34 | 45.65 | 48.36 | 50.24 | 51.46 | 46.38 |
| τ₃₆₅ₙₘ(%) | 98.7 | 98.8 | 98.7 | 98.9 | 99.4 | 99.5 | 98.7 |
| Δτ₃₆₅ₙₘ(%) | 0.8 | 0.7 | 0.6 | 0.7 | 0.5 | 0.6 | 1.0 |
| D_{A} | Class 2 | Class 2 | Class 2 | Class 2 | Class 1 | Class 1 | Class 2 |
| D_{W} | Class 1 | Class 2 | Class 1 | Class 2 | Class 2 | Class 1 | Class 1 |
| T_{g} (°C) | 458 | 460 | 457 | 456 | 465 | 450 | 468 |
| ρ (g/cm³) | 3.15 | 3.12 | 3.06 | 3.02 | 3.10 | 3.08 | 3.11 |
| α-30/70°C (×10⁻⁷/K) | 94 | 92 | 91 | 93 | 85 | 84 | 91 |
| Extent of bubble (Grade) | A₀ | A₀ | A₀ | A₀ | A₀ | A₀₀ | A₀ |
| Extent of striae (Grade) | C | C | B | C | C | B | C |
| F_{A} | 75 | 102 | 79 | 97 | 92 | 80 | 78 |
| High-temperature viscosity at 1200°C (dPaS) | 543 | 527 | 535 | 504 | 415 | 482 | 512 |

**Table 3**

| Example (wt%) | 8# | 9# | 10# | 11# | 12# | 13# | 14# |
|---|---|---|---|---|---|---|---|
| SiO₂ | 51.45 | 56.68 | 60.25 | 55.17 | 59.13 | 61.24 | 54.02 |
| PbO | 16.36 | 21.24 | 17.31 | 18.34 | 15.49 | 18.31 | 19.23 |
| Na₂O | 9.12 | 8.37 | 7.45 | 7.25 | 7.46 | 6.18 | 7.25 |
| K₂O | 6.35 | 7.22 | 5.69 | 6.33 | 5.63 | 5.34 | 6.45 |
| Li₂O | 0 | 0 | 0 | 0 | 0 | 0 | 0 |
| Al₂O₃ | 2.85 | 1.82 | 1.63 | 2.24 | 2.33 | 1.14 | 1.75 |
| ZrO₂ | 2.2 | 0.63 | 0.88 | 1.15 | 1.27 | 0.58 | 0.92 |
| BaO | 10.35 | 3.36 | 5.25 | 7.16 | 6.34 | 5.35 | 9.33 |
| SrO | 0 | 0 | 0 | 0 | 0 | 0 | 0 |
| CaO | 0 | 0 | 0 | 0 | 0 | 0 | 0 |
| MgO | 0 | 0 | 0 | 0 | 0 | 0 | 0 |
| B₂O₃ | 0 | 0 | 0 | 0 | 0 | 0 | 0 |
| La₂O₃ | 0 | 0 | 0 | 0 | 0 | 0 | 0 |
| Gd₂O₃ | 0 | 0 | 0 | 0 | 0 | 0 | 0 |
| Y₂O₃ | 0 | 0 | 0 | 0 | 0 | 0 | 0 |
| Yb₂O₃ | 0 | 0 | 0 | 0 | 0 | 0 | 0 |
| Nb₂O₅ | 0 | 0 | 0 | 0 | 0 | 0 | 0 |
| WO₃ | 0 | 0 | 0 | 0 | 0 | 0 | 0 |
| ZnO | 0 | 0 | 0 | 0 | 0 | 0 | 0 |
| TiO₂ | 0 | 0 | 0 | 0 | 0 | 0 | 0 |
| Sb₂O₃ | 0.6 | 0.1 | 0.2 | 0.1 | 0.3 | 0.5 | 0.2 |
| SnO₂ | 0 | 0 | 0 | 0 | 0 | 0 | 0 |
| CeO₂ | 0 | 0 | 0 | 0 | 0 | 0 | 0 |
| F | 0.72 | 0.58 | 1.34 | 2.26 | 2.05 | 1.36 | 0.85 |
| Total | 100 | 100 | 100 | 100 | 100 | 100 | 100 |
| PbO/BaO | 1.58 | 6.32 | 3.30 | 2.56 | 2.44 | 3.42 | 2.06 |
| SiO₂/PbO | 3.14 | 2.67 | 3.48 | 3.01 | 3.82 | 3.34 | 2.81 |
| (Al₂O₃+ZrO₂)/BaO | 0.49 | 0.73 | 0.48 | 0.47 | 0.57 | 0.32 | 0.29 |
| (Na₂O+K₂O)/PbO | 0.95 | 0.73 | 0.76 | 0.74 | 0.85 | 0.63 | 0.71 |
| Na₂O/K₂O | 1.44 | 1.16 | 1.31 | 1.15 | 1.33 | 1.16 | 1.12 |
| Al₂O₃/(ZrO₂+TiO₂+Nb₂O₅) | 1.30 | 2.89 | 1.85 | 1.95 | 1.83 | 1.97 | 1.90 |
| F/(Al₂O₃+ZrO₂) | 0.14 | 0.24 | 0.53 | 0.67 | 0.57 | 0.79 | 0.32 |
| 10×F/PbO | 0.44 | 0.27 | 0.77 | 1.23 | 1.32 | 0.74 | 0.44 |
| (MgO+CaO+SrO)/F | 0.00 | 0.00 | 0.00 | 0.00 | 0.00 | 0.00 | 0.00 |
| n_{d} | 1.53625 | 1.55125 | 1.54625 | 1.55067 | 1.53854 | 1.54725 | 1.54523 |
| Vd | 47.65 | 48.38 | 48.15 | 47.82 | 49.06 | 48.22 | 48.37 |
| τ₃₆₅ₙₘ(%) | 98.8 | 98.9 | 99.6 | 99.8 | 99.7 | 99.8 | 99.4 |
| Δτ₃₆₅ₙₘ(%) | 0.4 | 0.4 | 0.3 | 0.4 | 0.4 | 0.4 | 0.3 |
| D_{A} | Class 1 | Class 1 | Class 1 | Class 1 | Class 1 | Class 1 | Class 1 |
| D_{W} | Class 1 | Class 1 | Class 1 | Class 1 | Class 1 | Class 1 | Class 1 |
| T_{g} (°C) | 443 | 447 | 445 | 441 | 438 | 442 | 446 |
| ρ (g/cm³) | 2.96 | 2.93 | 2.95 | 2.91 | 2.96 | 2.94 | 2.93 |
| α-_{30/70°C} (×10⁻⁷/K) | 88 | 86 | 85 | 87 | 83 | 84 | 86 |
| Extent of bubble (Grade) | A₀₀ | A₀₀ | A₀₀ | A₀₀ | A₀₀ | A₀₀ | A₀₀ |
| Extent of striae (Grade) | B | B | B | B | B | B | B |
| F_{A} | 82 | 83 | 86 | 88 | 85 | 90 | 81 |
| High-temperature viscosity at 1200°C (dPaS) | 475 | 453 | 405 | 413 | 375 | 392 | 436 |

**Table 4**

| Example (wt%) | 15# | 16# | 17# | 18# | 19# | 20# | 21# |
|---|---|---|---|---|---|---|---|
| SiO₂ | 58.21 | 57.46 | 58.69 | 62.14 | 56.19 | 57.45 | 55.78 |
| PbO | 18.69 | 17.17 | 16.25 | 16.41 | 20.1 | 17.93 | 16.33 |
| Na₂O | 6.75 | 8.06 | 7.15 | 6.36 | 8.24 | 7.58 | 8.34 |
| K₂O | 6.36 | 7.05 | 6.22 | 5.43 | 5.68 | 6.34 | 7.42 |
| Li₂O | 0 | 0 | 0 | 0 | 0 | 0 | 0 |
| Al₂O₃ | 1.83 | 1.86 | 2.45 | 1.58 | 1.24 | 1.36 | 1.72 |
| ZrO₂ | 1.07 | 1.32 | 1.5 | 0.83 | 0.64 | 0.72 | 1.13 |
| BaO | 5.63 | 6.06 | 6.38 | 5.48 | 6.35 | 7.44 | 8.05 |
| SrO | 0 | 0 | 0 | 0 | 0 | 0 | 0 |
| CaO | 0 | 0 | 0 | 0 | 0 | 0 | 0 |
| MgO | 0 | 0 | 0 | 0 | 0 | 0 | 0 |
| B₂O₃ | 0 | 0 | 0 | 0 | 0 | 0 | 0 |
| La₂O₃ | 0 | 0 | 0 | 0 | 0 | 0 | 0 |
| Gd₂O₃ | 0 | 0 | 0 | 0 | 0 | 0 | 0 |
| Y₂O₃ | 0 | 0 | 0 | 0 | 0 | 0 | 0 |
| Yb₂O₃ | 0 | 0 | 0 | 0 | 0 | 0 | 0 |
| Nb₂O₅ | 0 | 0 | 0 | 0 | 0 | 0 | 0 |
| WO₃ | 0 | 0 | 0 | 0 | 0 | 0 | 0 |
| ZnO | 0 | 0 | 0 | 0 | 0 | 0 | 0 |
| TiO₂ | 0 | 0 | 0 | 0 | 0 | 0 | 0 |
| Sb₂O₃ | 0.4 | 0.2 | 0.2 | 0.3 | 0.2 | 0.1 | 0.1 |
| SnO₂ | 0 | 0 | 0 | 0 | 0 | 0 | 0 |
| CeO₂ | 0 | 0 | 0 | 0 | 0 | 0 | 0 |
| F | 1.06 | 0.82 | 1.16 | 1.47 | 1.36 | 1.08 | 1.13 |
| Total | 100 | 100 | 100 | 100 | 100 | 100 | 100 |
| PbO/BaO | 3.32 | 2.83 | 2.55 | 2.99 | 3.17 | 2.41 | 2.03 |
| SiO₂/PbO | 3.11 | 3.35 | 3.61 | 3.79 | 2.80 | 3.20 | 3.42 |
| (Al₂O₃+ZrO₂)/BaO | 0.52 | 0.52 | 0.62 | 0.44 | 0.30 | 0.28 | 0.35 |
| (Na₂O+K₂O)/PbO | 0.70 | 0.88 | 0.82 | 0.72 | 0.69 | 0.78 | 0.97 |
| Na₂O/K₂O | 1.06 | 1.14 | 1.15 | 1.17 | 1.45 | 1.20 | 1.12 |
| Al₂O₃/(ZrO₂+TiO₂+Nb₂O₅) | 1.71 | 1.41 | 1.63 | 1.90 | 1.94 | 1.89 | 1.52 |
| F/(Al₂O₃+ZrO₂) | 0.37 | 0.26 | 0.29 | 0.61 | 0.72 | 0.52 | 0.40 |
| 10×F/PbO | 0.57 | 0.48 | 0.71 | 0.90 | 0.68 | 0.60 | 0.69 |
| (MgO+CaO+SrO)/F | 0.00 | 0.00 | 0.00 | 0.00 | 0.00 | 0.00 | 0.00 |
| n_{d} | 1.53856 | 1.54472 | 1.54752 | 1.54563 | 1.55346 | 1.55124 | 1.54068 |
| Vd | 49.15 | 47.42 | 48.27 | 47.82 | 48.04 | 47.68 | 48.35 |
| τ₃₆₅ₙₘ(%) | 99.4 | 99.3 | 99.4 | 99.8 | 99.7 | 99.6 | 99.7 |
| Δτ₃₆₅ₙₘ(%) | 0.3 | 0.4 | 0.4 | 0.2 | 0.4 | 0.3 | 0.4 |
| D_{A} | Class 1 | Class 1 | Class 1 | Class 1 | Class 1 | Class 1 | Class 1 |
| D_{W} | Class 1 | Class 1 | Class 1 | Class 1 | Class 1 | Class 1 | Class 1 |
| T_{g} (°C) | 445 | 448 | 436 | 445 | 444 | 442 | 447 |
| ρ (g/cm³) | 2.94 | 2.90 | 2.91 | 2.95 | 2.94 | 2.93 | 2.94 |
| α_{-30/70°C} (×10⁻⁷/K) | 85 | 87 | 86 | 85 | 84 | 86 | 84 |
| Extent of bubble (Grade) | A₀₀ | A₀₀ | A₀₀ | A₀₀ | A₀₀ | A₀₀ | A₀₀ |
| Extent of striae (Grade) | B | B | B | B | B | B | B |
| F_{A} | 82 | 81 | 83 | 86 | 87 | 84 | 83 |
| High-temperature viscosity at 1200°C (dPaS) | 428 | 430 | 435 | 415 | 386 | 424 | 416 |

### <Glass preform examples>

The glass obtained in the optical glass examples 1 to 21 is used to fabricate the preform, for example, various lenses or prisms such as concave meniscus lenses, convex meniscus lenses, biconvex lenses, biconcave lenses, plano-convex lenses, and plano-concave lenses by means of grinding and polishing, or a press forming technique, for example, hot press forming or precision impact molding.

### <Glass element examples>

The preform obtained in the glass preform examples is annealed, to reduce internal stress of the glass while fine tuning an index of refraction, such that the index of refraction and other optical properties can satisfy requirements.

Then, each preform is ground, polished, and made into a concave meniscus lens, a convex meniscus lens, a biconvex lens, a biconcave lens, a plano-convex lens, a plano-concave lens, or various other lenses or prisms. The surface of the obtained glass element may be coated with an anti-reflection film.

### <Device examples>

The glass element obtained in the glass element examples is applied to optical designs by using one or more such glass elements to form optical parts or optical assemblies to be used in, for example, imaging devices, sensors, microscopes, medical technologies, digital projection, communications, optical communication technologies/information transmission, optics/illumination in the automotive field, photolithography technologies, excimer lasers, wafers, computer chips, and integrated circuits and electronic devices including such circuits and chips.

## Claims

1. Optical glass, **characterized by** containing the following components in units of weight percentage: 50% to 70% of SiO₂; 12.5% to 30% of PbO; 4% to 15% of Na₂O; 2% to 13% of K₂O; and 1% to 14% of BaO, wherein SiO₂/PbO is 1.8 to 5.5.

2. The optical glass according to claim 1, **characterized by** further containing the following components in units of weight percentage: 0% to 5% of Al₂O₃; 0% to 7% of Li₂O; 0% to 5% of ZrO₂; 0% to 8% of SrO; 0% to 8% of CaO; 0% to 8% of MgO; 0% to 8% of B₂O₃; 0% to 5% of Ln₂O₃; 0% to 3% of Nb₂O₅; 0% to 3% of WO₃;0% to 3% of ZnO; 0% to 3% of TiO₂; 0% to 1% of a clarifying agent; and/or 0% to 5% of F, wherein Ln₂O₃ is one or more of La₂O₃, Gd₂O₃, Y₂O₃, and Yb₂O₃, and the clarifying agent is one or more of Sb₂O₃, SnO₂, and CeO₂.

3. Optical glass, **characterized by** containing components of SiO₂, PbO, Na₂O, K₂O, and BaO in units of weight percentage, wherein SiO₂/PbO is 1.8 to 5.5, an index of refraction n_{d} of the optical glass is 1.51 to 1.58, an Abbe number v_{d} is 45 to 52, ultraviolet radiation resistance attenuation of transmittance at 365 nm Δτ₃₆₅ₙₘ is less than 1.5%, and density ρ is less than 3.30 g/cm³.

4. The optical glass according to claim 3, **characterized by** containing the following components in units of weight percentage: 50% to 70% of SiO₂; 12.5% to 30% of PbO; 4% to 15% of Na₂O; 2% to 13% of K₂O; 1% to 14% of BaO; 0% to 5% of Al₂O₃; 0% to 7% of Li₂O; 0% to 5% of ZrO2; 0% to 8% of SrO; 0% to 8% of CaO; 0% to 8% of MgO; 0% to 8% of B₂O₃; 0% to 5% of Ln₂O₃; 0% to 3% of Nb₂O₅; 0% to 3% of WO₃;0% to 3% of ZnO; 0% to 3% of TiO₂; 0% to 1% of a clarifying agent; and/or 0% to 5% of F, wherein Ln₂O₃ is one or more of La₂O₃, Gd₂O₃, Y₂O₃, and Yb₂O₃, and the clarifying agent is one or more of Sb₂O₃, SnO₂, and CeO₂.

5. The optical glass according to any one of claims 1 to 4, **characterized in that** the components in units of weight percentage satisfy one or more of the following nine conditions:
(1) PbO/BaO is 1.0 to 15.0;
(2) SiO₂/PbO is 2.0 to 5.0;
(3) (Al₂O₃+ZrO₂)/BaO is 0.05 to 3.0;
(4) (Na₂O+K₂O)/PbO is 0.3 to 2.0;
(5) Na₂O/K₂O is 0.8 to 5.0;
(6) Al₂O₃/(ZrO₂+TiO₂+Nb₂O₅) is greater than 0.5;
(7) F/(Al₂O₃+ZrO₂) is 0.1 to 5.0;
(8) 10×F/PbO is 0.05 to 3.2; and
(9) (MgO+CaO+SrO)/F is less than 2.0.

6. The optical glass according to any one of claims 1 to 4, **characterized in that** the components in units of weight percentage satisfy one or more of the following nine conditions:
(1) PbO/BaO is 1.5 to 10.0;
(2) SiO₂/PbO is 2.3 to 4.5;
(3) (Al₂O₃+ZrO₂)/BaO is 0.1 to 2.0;
(4) (Na₂O+K₂O)/PbO is 0.4 to 1.5;
(5) Na₂O/K₂O is 1.0 to 4.0;
(6) Al₂O₃/(ZrO₂+TiO₂+Nb₂O₅) is greater than 0.8;
(7) F/(Al₂O₃+ZrO₂) is 0.3 to 4.0;
(8) 10×F/PbO is 0.1 to 2.0; and
(9) (MgO+CaO+SrO)/F is less than 1.5.

7. The optical glass according to any one of claims 1 to 4, **characterized in that** the components in units of weight percentage satisfy one or more of the following nine conditions:
(1) PbO/BaO is 2.0 to 8.0;
(2) SiO₂/PbO is 2.6 to 4.0;
(3) (Al₂O₃+ZrO₂)/BaO is 0.1 to 1.5;
(4) (Na₂O+K₂O)/PbO is 0.5 to 1.2;
(5) Na₂O/K₂O is 1.1 to 3.0;
(6) Al₂O₃/(ZrO₂+TiO₂+Nb₂O₅) is greater than 1.0;
(7) F/(Al₂O₃+ZrO₂) is 0.4 to 3.0;
(8) 10×F/PbO is 0.2 to 1.0; and
(9) (MgO+CaO+SrO)/F is less than 1.0.

8. The optical glass according to any one of claims 1 to 4, **characterized in that** the components in units of weight percentage satisfy one or more of the following eight conditions:
(1) PbO/BaO is 2.8 to 5.0;
(2) (Al₂O₃+ZrO₂)/BaO is 0.15 to 0.8;
(3) (Na₂O+K₂O)/PbO is 0.6 to 1.0;
(4) Na₂O/K₂O is 1.1 to 2.5;
(5) Al₂O₃/(ZrO₂+TiO₂+Nb₂O₅) is 1.5 to 5.0;
(6) F/(Al₂O₃+ZrO₂) is 0.5 to 2.0;
(7) 10×F/PbO is 0.2 to 0.8; and
(8) (MgO+CaO+SrO)/F is less than 0.5.

9. The optical glass according to any one of claims 1 to 4, **characterized by** containing the following components in units of weight percentage: 55% to 65% of SiO₂; 14% to 27% of PbO; 5% to 14% of Na₂O; 4% to 12% of K₂O; 0.1% to 4% of Al₂O₃; 2% to 12% of BaO; 0.1% to 4% of F; 0% to 3% of Li₂O; 0.1% to 4% of ZrO₂; 0% to 5% of SrO; 0% to 5% of CaO; 0% to 5% of MgO; 0% to 5% of B₂O₃; 0% to 3% of Ln₂O₃; 0% to 2% of Nb₂O₅; 0% to 2% of WO₃;0% to 2% of ZnO; 0% to 2% of TiO₂; and/or 0% to 0.8% of a clarifying agent, wherein Ln₂O₃ is one or more of La₂O₃, Gd₂O₃, Y₂O₃, and Yb₂O₃, and the clarifying agent is one or more of Sb₂O₃, SnO₂, and CeO₂.

10. The optical glass according to any one of claims 1 to 4, **characterized by** containing the following components in units of weight percentage: 57% to 63% of SiO₂; 16% to 23% of PbO; 6% to 12% of Na₂O; 5% to 10% of K₂O; 0.1% to 3% of Al₂O₃; 3% to 9% of BaO; 0.2% to 3% of F; 0% to 2% of Li₂O; 0.1% to 2% of ZrO₂; 0% to 2% of SrO; 0% to 2% of CaO; 0% to 2% of MgO; 0% to 2% of B₂O₃; 0% to 1% of Ln₂O₃; 0% to 1% of Nb₂O₅; 0% to 1% of WO₃;0% to 1% of ZnO; 0% to 1% of TiO₂; and/or 0% to 0.5% of a clarifying agent, wherein Ln₂O₃ is one or more of La₂O₃, Gd₂O₃, Y₂O₃, and Yb₂O₃, and the clarifying agent is one or more of Sb₂O₃, SnO₂, and CeO₂.

11. The optical glass according to any one of claims 1 to 4, **characterized in that** components of the optical glass do not comprise Li₂O; SrO; CaO; MgO; B₂O₃; Nb₂O₅; WO₃; ZnO; TiO₂; a V oxide; a Cr oxide; an Mn oxide; a Fe oxide; a Co oxide; a Ni oxide; a Cu oxide; an Ag oxide; and/or a Mo oxide.

12. The optical glass according to any one of claims 1 to 4, **characterized in that** the index of refraction n_{d} of the optical glass is 1.52 to 1.57; the Abbe number v_{q} is 46 to 50; the transmittance at 365 nm τ₃₆₅ₙₘ is greater than 98.5%; the ultraviolet radiation resistance attenuation of the transmittance at 365 nm Δτ₃₆₅ₙₘ is less than 1.0%; acid durability D_{A} is higher than Class 2; water durability D_{W} is higher than Class 2; the density ρ is less than 3.20 g/cm³; a coefficient of thermal expansion α_{-30/70°C} is less than 100×10⁻⁷/K; an extent of bubble is higher than Grade A; an extent of striae is higher than Grade C; an abrasion factor F_{A} is 60 to 110; a high-temperature viscosity at 1200°C is less than 800 dPaS; and/or a transition temperature T_{g} is lower than 480°C.

13. The optical glass according to any one of claims 1 to 4, **characterized in that** the index of refraction n_{d} of the optical glass is 1.53 to 1.56; the Abbe number v_{q} is 47 to 49; the transmittance at 365 nm τ₃₆₅ₙₘ is greater than 99.5%; the ultraviolet radiation resistance attenuation of the transmittance at 365 nm Δτ₃₆₅ₙₘ is less than 0.6%; acid durability D_{A} is Class 1; water durability D_{W} is Class 1; the density ρ is less than 3.10 g/cm³; a coefficient of thermal expansion α_{-30/70°C} is less than 90×10⁻⁷/K; an extent of bubble is Grade A₀₀; an extent of striae is higher than Grade B; an abrasion factor F_{A} is 80 to 95; a high-temperature viscosity at 1200°C is less than 450 dPaS; and/or a transition temperature T_{g} is lower than 455°C.

14. A glass element, **characterized by** being made of the optical glass according to any one of claims 1 to 4.

15. A device, **characterized by** containing the optical glass according to any one of claims 1 to 4; and/or containing the glass element according to claim 14.
